Europäisches Patentamt

European Patent Office

Office européen des brevets

(19)

(11) Veröffentlichungsnummer: **0 324 396**
**A2**

## EUROPÄISCHE PATENTANMELDUNG

(12)

(21) Anmeldenummer: 89100229.7

(51) Int. Cl.⁴: **H02P 6/02**

(22) Anmeldetag: .07.01.89

(30) Priorität: **15.01.88 DE 3800960**

(43) Veröffentlichungstag der Anmeldung:
**19.07.89 Patentblatt 89/29**

(84) Benannte Vertragsstaaten:
**AT BE CH DE ES FR GB IT LI LU NL SE**

(71) Anmelder: **Deutsche Thomson-Brandt GmbH**
**Hermann-Schwer-Strasse 3 Postfach 1307**
**D-7730 Villingen-Schwenningen(DE)**

(72) Erfinder: **Mahr, Peter**
**Brandenburger Strasse 20**
**D-7819 Denzlingen(DE)**

(74) Vertreter: **Körner, Peter, Dipl.-Ing.**
**Deutsche Thomson-Brandt GmbH Patent-**
**und Lizenzabteilung Göttinger Chaussee 76**
**D-3000 Hannover 91(DE)**

(54) **Verfahren zur Kommutierung von Spulensträngen eines Gleichstrommotors.**

(57) Bekannte Kommotierungen von Gleichstrommotoren, z.B. mit Hilfe von Hallelementen, weisen Nachteile wie wellenförmiges Drehmoment, geringen Wirkungsgrad, axiale Schwingungen sowie keinen fließenden Übergang bei Beschleunigung und Bremsung auf.

Durch Anlegen eines Drehfeldes mit sinusförmigen gegeneinander phasenverschobenen Spannungen an alle Spulenträger eines Motors werden die unter 2.1. aufgeführten Mängel vermieden.

Antriebe insbesondere für Geräte der Unterhaltungselektronik.

Fig.1

EP 0 324 396 A2

## Verfahren zur Kommutierung von Spulensträngen eines Gleichstrommotors

Bekannte elektronisch kommutierte Gleichstrommotore sind mit mehreren Positionssensoren, z.B. Hallelementen, ausgerüstet, die jeweils einem Spulenstrang zugeordnet sind. Dabei sind die Sensoren in einer festen räumlichen Anordnung in Bezug auf die Position eines Spulenstranges ausgerichtet. In den Sensoren werden durch die Rotation z.B. eines mehrpoligen Permanentmagnete tragenden Rotors Signale erzeugt, durch die die jeweilige Rotorwinkellage erkannt wird. Von diesen Signalen wird die jeweilige Spulenkommutierung ausgelöst. Zusätzlich sind derartige Motore mit einem Frequenzgenerator ausgerüstet, der Informationen, d.h. Signale, die proportional zur Motordrehzahl sind, liefern. Beide Informationen werden benötigt und mittels elektronischer Schaltungen eine Motorregelung durchzuführen. Derartige Motore sind in der Veröffentlichung " DC-Motor, Speed Controls, Servo System ", Ausgabe 1980 der Electro-craft Cooperation, USA, beschrieben. Diese Motore weisen jedoch einige Unzulänglichkeiten auf:

1. Der Motorwirkungegrad ist nicht sehr hoch, da nur jeweils ein Spulenstrang aktiv ist.

2. Das Drehmoment verläuft wellenförmig, da bei Beginn der Kommutierung an einem Spulenstrang das Drehmoment noch gering ist, es wächst zur Mitte hin an und nimmt dann wieder ab.

3. Bedingt durch die versetzte Anordnung der einzelnen Spulenstränge entstehen umlaufende Kräfte auf den Rotor, welche ausgehend von der jeweils aktiven Spule sprungartig einsetzen und den Rotor, insbesondere bei Scheibenläufern, in achsiale Schwingungen versetzen. Diese Schwingungen übertragen sich einerseits auf die Motor welle und verschlechtern somit die Fibration des Motors. Sie bewirken andererseits eine hörbare Geräuschentwicklung, insbesondere bei hohen Belastungen.

4. Durch plötzliches Ausschalten des jeweiligen Spulenstranges entstehen Spannungsspitzen, welche insbesondere bei Geräten der Unterhaltungselektronik, so z.B. Audio- und Videogeräten, den Signalstörabstand deutlich verschlechtern. Der Einsatz von Siebmitteln schafft bei schnell arbeitenden Regelvorgängen hierzu kaum eine Abhilfe.

5. Soll der Motor aktiv gebremst werden, so ist dieses nur durch Verlagerung des Kommutierungszeitpunktes möglich. Dadurch entsteht jedoch kein fließender Übergang von Beschleunigung und Bremsung wie es bei bestimmten Anwendungen erforderlich ist.

Es ist Aufgabe der Erfindung, eine Motorkommutierung für einen Gleichstrommotor aufzuzeigen, bei der die aufgeführten Mängel eines herkömmlichen Motors vermieden werden.

Diese Aufgabe wird gemäß der Erfindung durch die im Anspruch 1 aufgeführten Merkmale gelöst. Weiterbildungen der Erfindung sind in den Unteransprüchen gekennzeichnet.

Durch das gleichzeitige Anlegen phasenversetzter sinusförmiger Steuerspannungen an jeden Spulenstrang eines Gleichstrommotors werden alle Spulenstränge auch gleichzeitig erregt, d.h. alle Spulenstränge sind aktiv. Somit wird zu jedem Zeitpunkt in der Addition eine gleiche Antriebskraft mit gleichmäßigem Drehmoment erzeugt.

Der erforderliche Phasenversatz der Spannunen ergibt sich bei einem symmetrisch augebauten Motor aus der Anzahl der Spulenstränge. Somit ist dieser z.B. bei einem dreisträngigen Motor $360^\circ$ : $3 = 120^\circ$.

Die phasenversetzten Sinusschwingungen können durch Generatoren sowohl in analoger als auch in digitaler Schaltungstechnik erzeugt werden. Die Größe der erforderlichen Spannungen, d.h. die Amplitude der Sinusschwingungen ergibt sich aus dem erforderlichen Drehmoment. Da in jedem Spulenstrang durch die Rotation eines z.B. Permanentmagnete tragenden Rotors eine EMK erzeugt wird, die ebenso wie die Steuerspannungen sinusförmig und gegeneinander phasenversetzt sind, muß die erforderliche Steuerspannung in Relation hierzu eine bestimmte Größe haben, die abhängig von dem gewünschten Motorverhalten ist. Die wirksame Kommutierungsspannung ergibt sich also aus der Differenz zwischen angelegter Spannung und der durch den Motor erzeugten EMK. Dabei ist zu beobachten, daß bei großer Ansteuerspannung im Spulenstrang ein gleichphasiger Strom entsteht, welcher den Motor vorantreibt. Wird jedoch die Ansteuerspannung soweit verringert, daß diese kleiner als die EMK ist, so wird die wirksame Strangspannung und damit der Strom im Spulenstrang umgepolt, wodurch der Motor aktiv gebremst wird. Es ist also möglich, den Motor in zwei Quadranten zu betreiben. Durch Wahl der Größe der Steuerspannung kann somit der Motor mit fließendem Übergang beschleumigt oder gebremst werden.

Durch die Frequenz der angelegten sinusförmigen Steuerspannungen ist es möglich, gewünschte Rotationsgeschwindigkeiten einzustellen, da der Rotor unmittelbar der Frequenz des sinusförmigen Drehfeldes folgt. In der Praxis können so mehrere tausend Umdrehungen pro Minute eingestellt werden. In einem ausgeführten Muster wurde eine Nenndrehzahl von exakt 6.000 Umdrehungen pro Minute durch Quarzsteuerung der Sinusgeneratoren eingestellt.

Im folgenden soll die Erfindung anhand eines Schaltungsbeispiels näher erläutert werden:

Fig. 1 zeigt ein Blockschaltbild für die sinusförmige Ansteuerung eines 3-strängigen Gleichstrommotors

Fig. 2 zeigt den Verlauf der sinusförmigen, gegeneinander phasenverschobenen Steuerspannungen für einen 3-strängigen Motor

Fig. 3 zeigt den Spannungsverlauf an Punkt D im Blockschaltbild

Fig. 4 zeigt den Spannungsverlauf an Punkt E im Blockschaltbild

Fig. 5 zeigt den Spannungsverlauf an einem Spulenstrang

Fig. 6 zeigt eine Drehmomentenkennlinie in Abhängigkeit einer Steuerspannung.

Fig. 7,8 und zeigen die Steuerung eines Slave-Motores

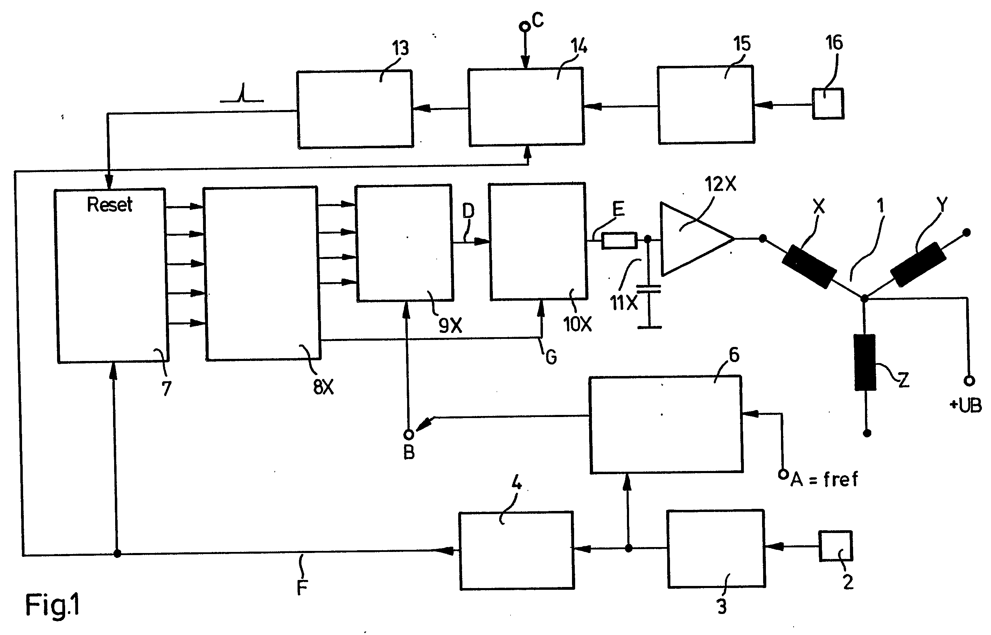

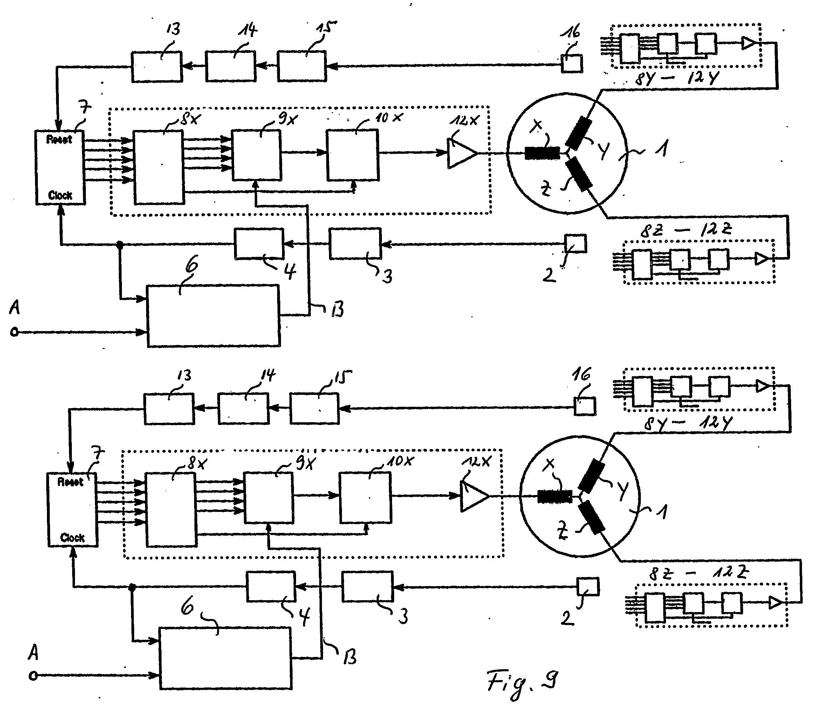

Fig. 1 zeigt ein Blockschaltbild für die sinusförmige Ansteuerung eines 3-strängigen Gleichstrommotors. Es ist der Stator von Motor 1 dargestellt, dessen kommutierbare Spulenstränge X,Y und Z in Sternschaltung ausgeführt sind. Der Sternmittelpunkt ist mit der Betriebsspannung + UB verbunden. Die Spulenstränge sind geometrisch versetzt unter einem Winkel von 120° angeordnet. Die sinusförmige Kommutierungsspannung an Punkt E, entsprechend Fig. 4, es sind 3 verschieden große Spannungen dargestellt, wird dem Spulenstrang X über RC-Glied 11X und den Gegentaktverstärker 12X zugeführt.

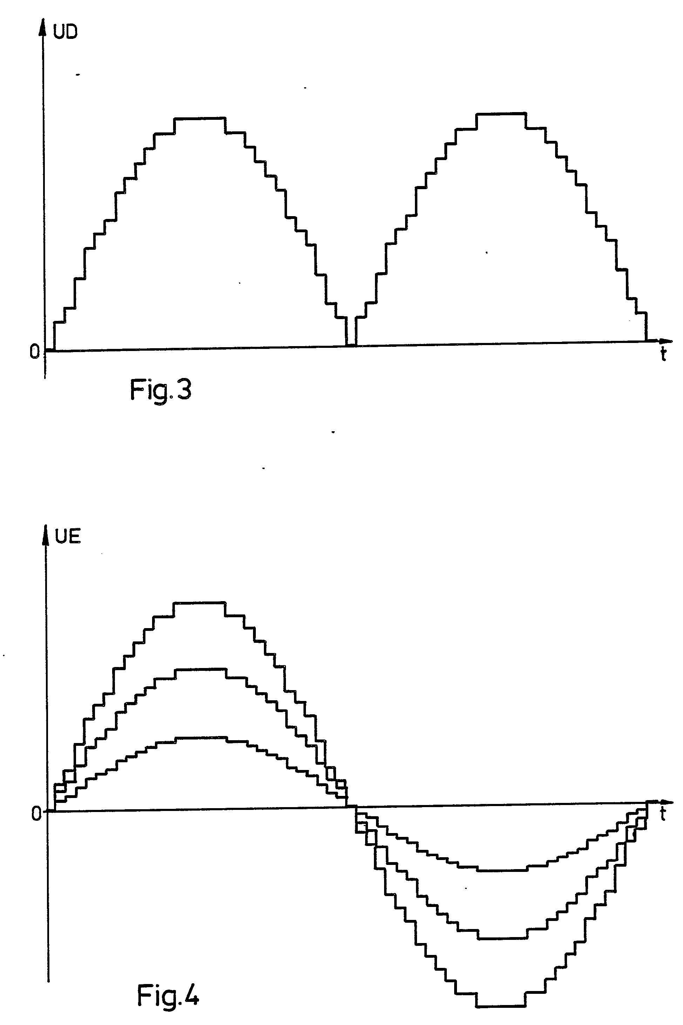

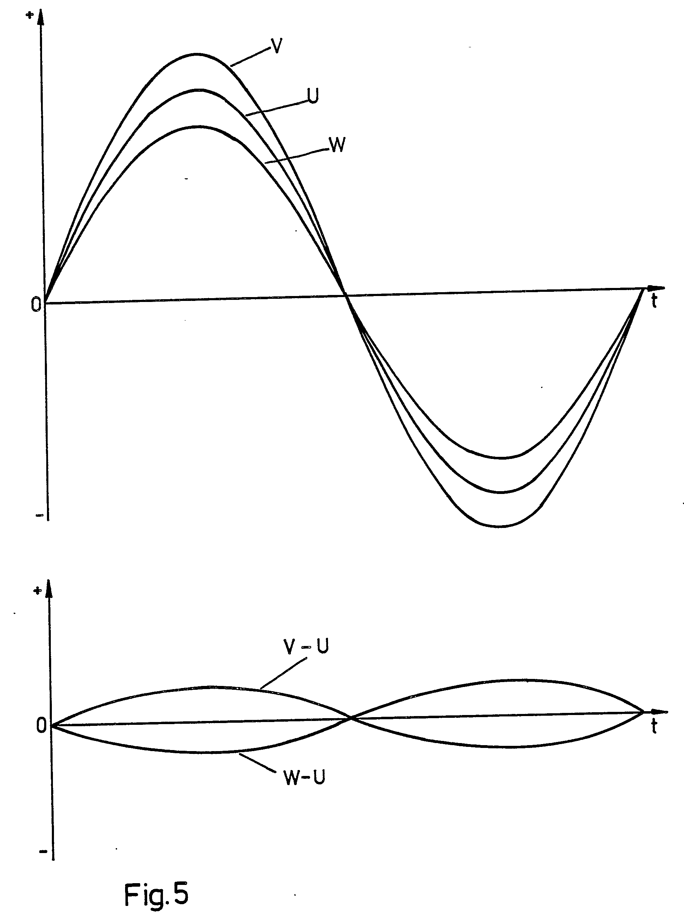

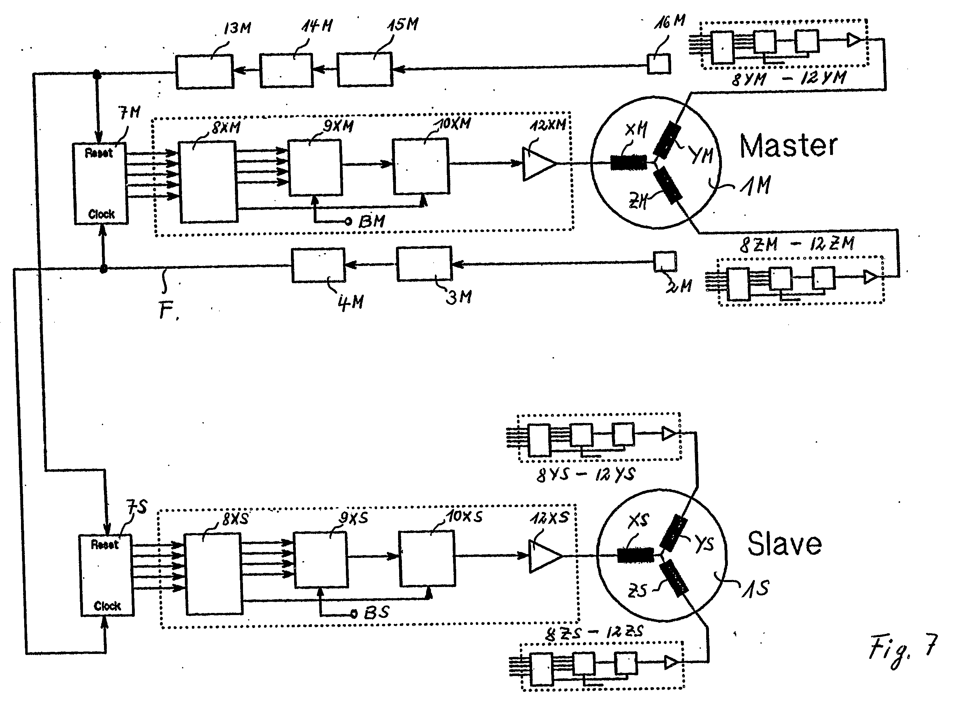

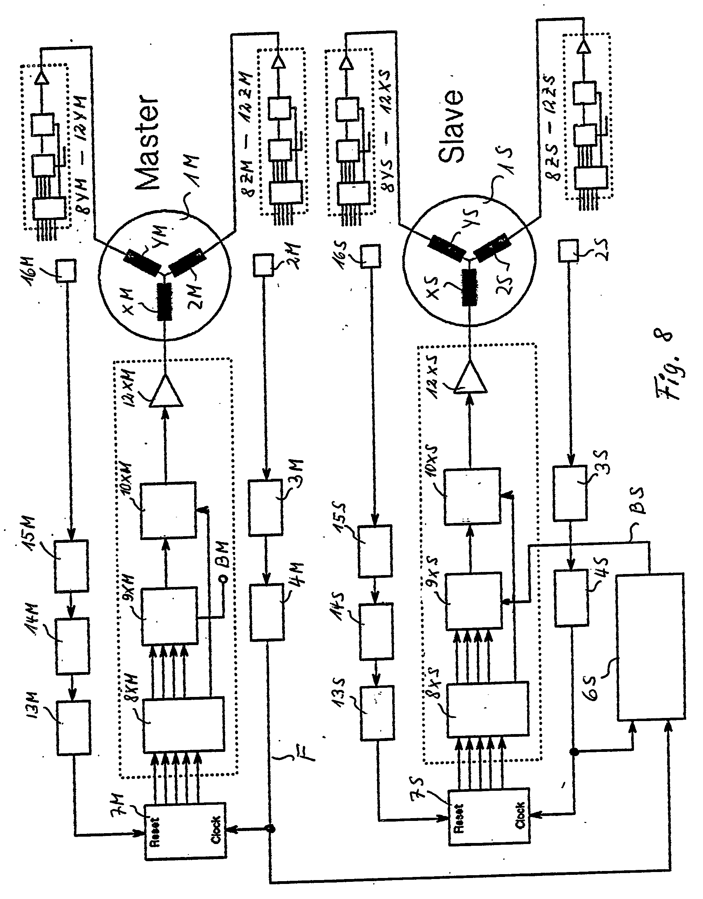

Erzeugt wird die sinusförmige Spannung in einem Festwertspeicher, EPROM 8X, in dem in digitaler Form eine Tabelle für Sinusschwingungen gespeichert ist. Der Festwertspeicher hat eine 5-Bit Breite und eine 60-Bit Tiefe. Der Speicherinhalt entspricht 60 Werten einer kompletten Sinusschwingung, wobei an den Ausgängen der Betrag (4 Bit) und an Leitung G das Vorzeichen ausgegeben wird. Bei entsprechender Adressierung von EPROM 8X durch Adresszähler 7, der einen Zählumfang von 0 -59 und einen Rückstelleingang aufweist, wird in digitaler Form eine Sinusschwingung an den D/A-Wandler 9X ausgegeben, an dessen Ausgang D treppenförmige Sinushalbwellen entstehen, wie in Fig. 3 gezeigt. Da handelsübliche D/A-Wandler nur im ersten Quadranten arbeiten können, entstehen an Ausgang D die gezeigten Sinushalbwellen, welche durch den nachgeschalteten Inverter 10X durch Kippen jeder zweiten Halbwelle um die Spannungs-Nullinie zu einer harmonischen Schwingung umgeformt werden. Von dem über Leitung G durch EPROM 8X geschalteten Inverter 10X gelangt die treppenförmige Sinusschwingung über Leitung E an das Siebglied 11X, in welchem durch Glättung, d.h. durch Integration der Treppenstufen eine sinusförmige Schwingung entsteht, wie in Fig. 5, Kurve V bzw. W gezeigt ist.

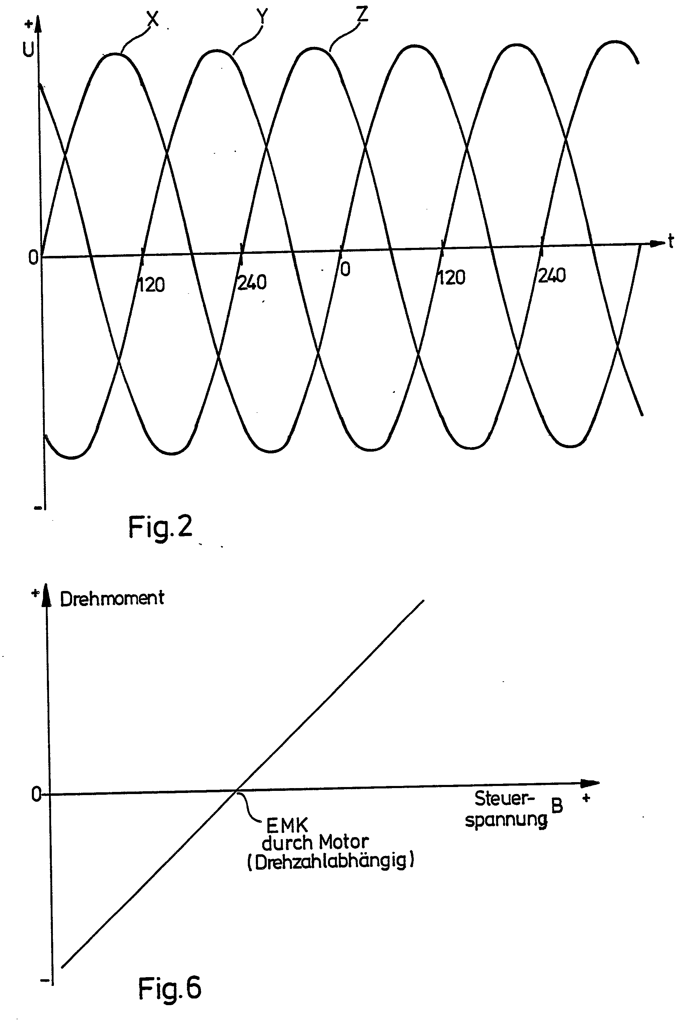

Ebenso wie für den Spulenstrang X werden die sinusförmigen Steuerspannungen für die Stränge Y und Z in nichtdargestellten Schaltungselementen 8Y, 8Z, 9Y, 9Z, 10Y, 10Z, 11Y, 11Z sowie 12Y und 12Z generiert, alllerdings mit dem Unterschied, daß die von den EPROMschaltungen 8Y und 8Z in digitaler Form ausgegebenen Sinusschwingungen um 120° bzw. 240° gegenüber der Spannung von EPROM 8X versetzt sind, da für einen 3-strängigen symmetrisch aufgebauten Motor 360 : 3 = 120° Phasenverschiebung zwischen den einzelnen Spulensträngen gesteht. In Fig. 2 ist der Verlauf der gegeneinander phasenverschobenen Spannungen dargestellt.

Die Motorregelung erfolgt einerseits durch die vom Adressenzähler 7 ausgegebenen Informationen, wie Rotationsgeschwindigkeit und Kommutierungsanfang in Relation zur Stellung des Rotors, und andererseits durch eine Amplitudenveränderung der Sinusschwingungen im D/A-Wandler, wodurch das Drehmoment bei Anlegen einer analogen Steuerspannung an den Eingang B der D/A-Wandler regelbar ist. Eine Drehmomentenkennlienie in Abhängigkeit von der Steuerspannung an Eingang B zeigt die Fig. 6.

Für den Motoranlauf ist in der Schaltung 4 ein Oszillator integriert, durch den eine im Vergleich zur Nenndrehzahl geringe Frequenz von etwa 1 kHz generiert wird. Eine Anlauffrequenz ist erforderlich, da in den mit dem Rotor zusammenwirkenden Frequenzgenerator 2 bei stehendem Motor kein Signal erzeugt wird, welches für eine Adressierung der EPROM-Speicher 8 erforderlich ist. Die Impulse der Anlauffrequenz gelangen zunächst an den Adresszähler 7, welcher die 3 EPROM-speicher 8X - 8Z adressiert. Diese steuern die nachgeschalteten D/A-Wandler 9X - 9Z. Wie bereits beschrieben, werden die 3-phasenverschobenen Sinusschwingungen an die Spulenstränge X- Z gelegt. Es entsteht dadurch ein 3-phasiges Drehfeld mit geringer Frequenz. Diesem Drehfeld wird nun der Rotor, der z.B. mit 4 Magnetpolpaaren versehen ist, folgen. Sobald sich der Rotor bewegt, wird der mit dem Rotor zusammenwirkende Frequenzgenerator 2 Impulse generieren, welche über den Verstärker 3 der Schaltung 4 und der Regelschaltung 6 zugeführt werden. Die Frequenz am Ausgang F der Schaltung 4 steigt an, wodurch auch die Frequenz von Adresszähler 7 vergrößert und das Sinusdrehfeld weiter beschleunigt wird. Der Rotor folgt diesem Drehfeld und beschleunigt ebenso. Die Größe dieser Beschleunigung bzw. des Drehmomentes ist dabei abhängig von der Steuerspannung B, durch welche die Amplitude der Sinusschwingungen gesteuert wird.

Um ein größtmögliches Drehmoment erzeugen zu können, liefert der PU-Sensor 16 bei jeder Rotorumdrehung einen von der Rotorstellung abhängigen Impuls, welcher über einen Verstärker 15 einer Zählschaltung 14 zugeführt wird. Dieser Zähler wird mit einem digitalen Wort an seinem Eingang C geladen und zählt dann mit den vom Frequenzgenerator 2 auf Leitung F aufbereiteten Impulsen auf 0 zurück.

Bei Erreichen der 0 wird über den Impulsformer 13 ein Rückstellimpuls auf den Reseteingang des Adressenzählers 7 geliefert, wodurch dieser auf Adresse 0 mit den 3 Sinuskurven beginnt. Das digitale Wort an Eingang C von Zähler 14 muß dabei so gewählt werden, daß sich durch die relative Lage des Drehfeldes in Bezug auf die Rotorstellung ein maximales Drehmoment ergibt. Diese Einstellung kann manuell so vorgenommen werden, daß bei konstanter Steuerspannung am Eingang B der D/A-Wandler eine maximale Drehzahl entsteht.

Mittels eines geeigneten Programmes kann diese Aufgabe auch von einem Mikroprozessor übernommen werden. Diese Kommutierungseinstellung kann je nach Betriebsart (Bremsen, Beschleunigen, Vorwärts, Rückwärts...) getrennt optimiert werden.

In Fig. 5 sind die Spannungsverläufe an einem Spulenstrang dargestellt. Dabei soll der Motor jeweils die gleich Drehzahl einnehmen. Es wurde mit Kurve U die durch den Motor erzeugte EMK in dem Spulenstrang dargestellt, mit den Kurven V und W eine durch die an Eingang B vorgegebene Ansteuerspannung. Die wirksame Strangspannung, also die Differenz von angelegter Spannung und der vom Motor erzeugten EMK ist aus den Kurven V-U bzw. W-U ersichtlich. Dabei ist zu beobachten, daß bei großer Ansteuerspannung V ein gleichphasiger Spulenstrom entsteht, welcher den Motor vorantreibt. Wird jedoch die Ansteuerspannung wie in Kurve W gezeigt, verringert, so wird die wirksame Strangspannung und somit der Spulenstrom umgepolt, wodurch der Motor aktiv gebremst wird. Es ist also möglich, den Motor in 2 Quadranten zu betreiben. Dies ist insbesondere bei Stellmotoren von Bedeutung, bei denen die Motordrehzahl in sehr kurzer Zeit vergrößert und ebenso schnell verkleinert werden muß. Die Regelspannung B kann somit mit fließenden Übergang den Motor beschleunigen oder bremsen.

Ein Vorteil, welcher aus der rein statischen (digitalen) Generierung der Sinusschwingungen resultiert, besteht darin, daß der Drehzahlbereich des Motors sehr groß ist und bis zum Stillstand des Motors reicht. Die Rotorstellung kann dabei in Mikroschritten genau positioniert werden. In dem vorliegenden Ausführungsbeispiel sind dies bis zu 240 Stellungen pro Umdrehung.

Als Regelschaltung 6 wurde eine Phasenregelung durch eine PLL-Schaltung gewählt, durch welche der Rotor mittels Amplitudenregelung der Sinusschwingungen auf die extern zugeführte Frequenz an Anschluß A gezwungen wird, unabhängig davon, ob der Rotor im Beschleunigungs- oder Bremsbetrieb arbeitet. Die Rotordrehzahl folgt somit phasenstarr der an Eingang A der Regelschaltung angelegten Frequenz, auch wenn sich diese nach oben oder unten verändert. Zur Regelung des Motors kann jedoch auch jede andere Regelschaltung verwendet werden.

Damit 2 Motore, wie sie z.B. für eine Hubbewegung der Kopftrommel eines Magnetbandrecorders nach DE-OS 3542064 Verwendung finden, völlig synchron, d.h. phasenstarr miteinander anlaufen, wird eine Anordnung gemäß Fig. 7 gewählt, in der, wie auch in den folgenden Figuren 8 und 9 einzelnen Blöke in Analogie zu Fig. 1 benummert sind:

Für den Master-Motor, also den die Drehzahl bestimmenden Motor, wird die Anordnung gemäß Fig. 1 verwendet, wobei in Fig. 7 die für die erste Anlaufphase nicht zum Einsatz kommenden Schaltungsteile, nämlich die PLL- Schaltung 6 nicht eingezeichnet ist. Für den Slave-Motor werden die Blöcke 13 - 16 und 2 - 6 nicht benötigt und stattdessen das Taktsignal F von der Master-Motorsteuerung übernommen. Der Master-Motor wird für den Anlauf ein beschleunigendes Drehfeld erzeugen, welches den Rotor in Drehung versetzt. Ein synchrones Drehfeld für den Slave-Motor entsteht dadurch, daß die gleiche Anzahl von Taktimpulsen F am Adresszähler 7S des Slave-Motors ein Drehfeld mit der gleichen Frequenz wie der des Masters-Motores generiert, wodurch die Rotordrehzahlen gleich sind. Es ist dabei nicht erforderlich, daß die Zählerstände beider Adresszähler 7 identisch sind. Ein diesbezüglicher Versatz kann gewollt sein und bleibt konstant erhalten.

Um den Slave- Motor nach der ersten synchronen Anlaufphase unabhängig vom Master-Motor steuern zu können, wird in weiteren Schritten zunächst eine Schaltung nach Fig. 8 und danach eine Schaltung nach Fig. 9 gewählt. Die An- bzw. Umschaltung kann durch elektronische Schalter gesteuert werden, die nicht näher dargestellt sind. Im Prinzip genügt es, wenn die Steuerleitungen B an den Eingängen der A/D-Wandler 9 sowie die Steuerleitungen für den Adresszähler 7S umgeschaltet werden. In Fig. 8 ist zu erkennen, daß die Steuerung des Slave-Motors nach wie vor durch die auf Leitung F stehenden Impulse durch den Master-Motor erfolgt, während andererseits schon die von den eigenen Impulsgeneratoren 2S und 16S gelieferten Impulse mittels PLL-Schaltung 6S ausgewertet werden.

In einem letzten Schritt, dagestellt in Fig. 9 sind beide Motore unabhängig voneinander durch die den Eingängen A der PLL-Schaltungen 6 zugeführten Referenzfrequenzen steuerbar. Für einen gemeinsamen synchronen Verlauf eines Abschaltvorganges geschieht die Steuerung der Motore in umgekehrter Richtung, d.h. zunächst wird ein Schaltzustand nach Fig. 8 und anschließend ein Schaltzustand nach Fig. 7 gewählt.

Die 3 Anordnungen nach Fig. 7,8 und 9 ermöglichen es, daß ausgehend von einem Master-Motor eine beliebige Anzahl von Slave-Motoren gesteuert werden kann.

Im folgenden sollen die Vorteile der Sinusansteuerung für einen Gleichstrommotor gegenüber einer herkömmlich gestalteten Ansteuerung noch einmal tabellarisch aufgeführt werden:

1. Hoher Wirkungsgrad des Motors, da immer gleichzeitig alle 3 Spulen aktiv sind.

2. Gleichmäßiges Drehmoment aufgrund der 3 sinusförmigen Drehstromspannungen, welche zu jedem Zeitpunkt in der Addition gleiche Antriebskraft erzeugen.

3. Keine sprungartig einsetztenden Kräfte, welche magnetische Schwingungen und Laufgeräusche entwickeln würden.

4. Keine elektrischen Störungen durch Schaltvorgänge.

5. Der Motor kann in 2 Quadranten betrieben werden.

6. Sehr großer Drehzahlbereich von 0 bis einigen Tausend Umdrehungen pro Minute.

7. Feinpositionierung des Rotors in Mikroschritten auf jede wählbare Rotorstellung.

8. Rotordrehung bei jeder Drehzahl synchronisierbar für Slave-Motore.

## Ansprüche

1. Verfahren zur Kommutierung von Spulensträngen eines Gleichstrommotors, **dadurch gekennzeichnet, daß**

a) jedem Spulenstrang gleichzeitig eine sinusförmige Spannung zugeführt wird

b) die sinusförmigen Spannungen in kontinuierlicher Folge einen Phasenversatz um einen Winkel aufweisen, der sich aus der geometrischen Aufteilung der Spulenstränge innerhalb eines Kreises ergibt

c) die Frequenz der sinusförmigen Spannungen und damit die Umdrehungsgeschwindigkeit durch eine erste Stellgröße (A) einstellbar ist.

2. Verfahren nach Anspruch 1, **dadurch gekennzeichnet, daß** sich bei einem symmetrisch aufgebauten Motor der Phasenversatz der sinusförmigen Spannungen durch Teilung von 360° durch die Anzahl der Spulenstränge ergibt.

3. Verfahren nach Anspruch 1 oder Anspruch 2, **dadurch gekennzeichnet, daß** durch Veränderung der Amplituden der einzelnen sinusförmigen Spannungen durch eine zweite Stellgröße (B) das Drehmoment einstellbar ist.

4. Verfahren nach Anspruch 3, **dadurch gekennzeichnet, daß** durch Veränderung der Amplituden der einzelnen sinusförmigen Spannungen durch die zweite Stellgröße (B) in einen Spannungsbereich, der kleiner als die vom Motor generierte EMK ist, ein aktiver Bremsvorgang einstellbar ist.

5. Verfahren nach einem der Ansprüche 1 bis 4, **dadurch gekennzeichnet, daß** für ein optimales Drehmoment der Kommutierungsbeginn in Relation zum Rotor durch eine dritte Stellgröße (C) einstellbar ist.

6. Schaltung zur Durchführung des Verfahrens nach Anspruch 1, **dadurch gekennzeichnet, daß**

a) jedem Spulenstrang (X,Y,Z) ein Festwertspeicher (8X,8Y,8Z) mit einer in digitaler Form gespeicherten Tabelle für Sinusschwingungen zugeordnet ist,

b) ein Adresszähler (7) vorgesehen ist, dessen Ausgangssignale den Eingängen der Festwertspeicher (8) für die Ausgabe der gespeicherten Sinusschwingung zugeführt sind,

c) ein mit der Motorwelle verbundener Frequenzgenerator (2,16) vorgesehen ist, dessen Impulse zur Ansteuerung von Adresszähler (7) dienen.

7. Schaltung nach Anspruch 6, **dadurch gekennzeichnet, daß** für den phasenstarren Anlauf mehrerer Motore gleicher Bauart die von Adresszähler (7) abgegebenen Signale eines ersten Motors (Mastermotor) den Eingängen der Festwertspeicher (8XS, 8YS,8ZS) der weiteren Motore (Slavemotor) zugeführt werden.

Fig.1

EP 0 324 396 A2

Fig.2

Fig.6

UD

Fig. 3

UE

0

Fig. 4

Fig.5

Fig. 7

EP 0 324 396 A2

Fig. 8

Fig. 9

EP 0 324 396 A2